# EUROPEAN PATENT APPLICATION

(11) **EP 2 479 718 A1**
(43) Date of publication of application: **25.07.2012**
(21) Application number: 12152432.6
(22) Date of filing: 25.01.2012
(51) Int. Cl.: G06Q 10/06

(54) **Avionic data communication management arrangement**

(30) Priority: 25.01.2011 US 201113012880
(71) Applicant: United Technologies Corporation, Hartford, CT 06101 (US)
(72) Inventor: Scheid, Paul Raymond, West Hartford, CT 06107 (US); Beacham, William H., Enfield, CT 06082 (US)
(74) Representative: Leckey, David Herbert

(57) **Abstract**

The example avionic data communication management arrangement (10) includes a common infrastructure (14) having a first account (18a) and a second account (18b). The first account (18a) is configured to receive and store avionic data collected from a first aircraft (22a). The second account (18b) is configured to receive and store avionic data collected from a second aircraft (22b) that is from a different airline than the first aircraft (22a). The avionic data within the first account (18a) and the avionic data within the second account (18b) can both be accessed or managed by an administrating entity (20).

## Description

### BACKGROUND

This disclosure relates generally to avionic data communication and, more particularly, to a common infrastructure that manages avionic data collected from multiple airlines.

Aircraft collect data using various devices. For example, some aircraft use avionics boxes (or aircraft condition monitoring systems) to collect data. The avionics boxes are mounted within the aircraft and collect information from aircraft system sensors, such as environmental conditions, flight times, etc. Some avionics boxes perform procedures on other aircraft systems, such as monitoring portions of the aircraft. The avionics boxes then store the results of the procedure within electronic data files. The data is collected from the aircraft for review and analysis. The data is collected using a wireless connection when the aircraft is on the ground or when the aircraft is flying, for example. Updates to software and data files on the aircraft are typically pushed to the aircraft using a wireless connection.

Airlines (e.g., Delta, Continental) typically use similar types of infrastructures to communicate data between the aircraft and ground based systems. Each airline separately manages and maintains data communication and the associated infrastructure. (Delta manages and maintains data communication involving Delta aircraft, Continental manages and maintains data communication involving Continental aircraft, etc.) Each airline is responsible for the security of the data communication and infrastructure. Also, this approach makes it difficult to upgrade and update the data communication systems and infrastructure.

### SUMMARY

The example avionic data communication management arrangement includes a common infrastructure having a first account and a second account. The first account is configured to receive and store avionic data collected from a first aircraft. The second account is configured to receive and store avionic data collected from a second aircraft that is from a different airline than the first aircraft. The avionic data within the first account and the avionic data within the second account can both be accessed or managed by an administrating entity.

The example avionic data collection method includes communicating data with a first aircraft from a first airline. The method stores data associated with the first aircraft in a first account. The method then communicates data with a second aircraft from a second airline that is different than the first airline. The method stores the data associated with the second aircraft in the second account. The method manages the first account and the second account with a common infrastructure.

An example avionic data communication management arrangement includes a server arrangement having a first account and a second account that are each configured to store data obtained from different airlines. The first account is accessible to a first user and inaccessible to a second user. The second account is accessible to a first user and inaccessible to a second user. The first account and the second account are both accessible to an administrator.

As will be appreciated, the avionic data communication management arrangements and avionic data collection methods disclosed herein are computer implemented.

These and other features of the disclosed examples can be best understood from the following specification and drawings, the following of which is a brief description.

### BRIEF DESCRIPTION OF THE FIGURES

Figure 1 shows a schematic view of an example avionic data communication management arrangement.
Figure 2 shows the flow of an example avionic data communication method.

### DETAILED DESCRIPTION

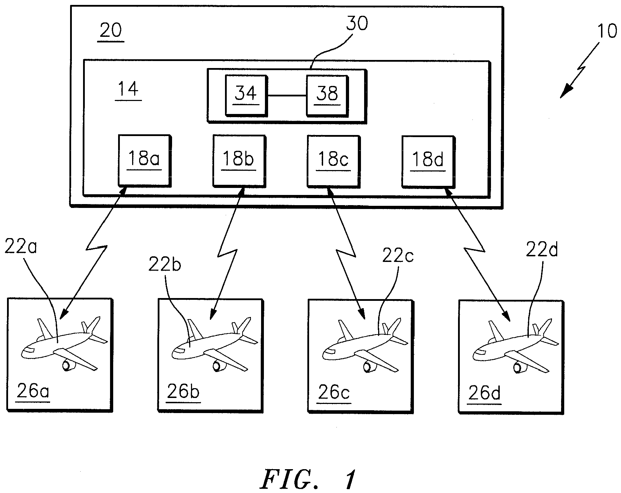

Referring to Figure 1, an example avionic data communication management arrangement 10 includes a common infrastructure 14, such as a server arrangement, having a multiple of separate, individual accounts 18a-18d. An administrating entity 20, or administrator, is able to access and manage data stored in each of the accounts 18a-18d. The administrating entity 20 is not an airline in this example.

A plurality of aircraft 22a-22d are each associated with a separate airline 26a-26d. For example, the airline 26a and the aircraft 22a are Delta, the airline 26b and the aircraft 22b are Continental, etc.

Each of the aircraft 22a-22d is configured to selectively communicate avionic data with one of the accounts 18a-18d. These communications are wireless in one example. The airlines 26a-26d are configured to communicate with one of the accounts 18a-18d having data from their aircraft 22a-22d. For example, the airline 26a is able to communicate with the account 18a. The communications are two-way communications. That is, information is able to move from the account 18a to the airline 26a (and the aircraft 22a) just as information is able to move from the airline 26a (and the aircraft 22a) to the account 18a.

Although pictured as single aircraft 22a-22d, each of the airlines 26a-26d typically has a fleet of aircraft. In one specific example, each aircraft within a fleet associated with the airline 26a communicates with the account 18a, and each aircraft within a fleet associated with the airline 26b communicates with the account 18b.

The airlines 26a-26d are able to access and manage data from one of the accounts 18a-18d through a web browser, for example. The airlines 26a-26d are not able to access and manage data directly from the accounts 18a-18d of unassociated aircraft. That is, the airline 26a, which is associated with Delta, is not able to access or manage data stored within the account 18b, which is associated with Continental.

The administrating entity 20, however, may compile reports that include data from all of the accounts 18a-18d. The administrating entity 20 also can distribute those reports to each of the airlines 26a-26d. In such an example, the administrating entity 20 acts as a filter to control the information sent to each of the airlines 26a-26d. The airlines 26a-26d may select the reports they desire from a web-based interface.

In this example, the administrating entity 20 charges the airlines 26a-26d for communicating with their account 18a-18d. In one example, the airlines 26a-26d pay on a flight hour basis for accessing and managing data and for downloading or uploading data from the aircraft 22a-22d to the accounts 18a-18d. The administrating entity 20 may also charge the airline for accessing a report that includes data from all of the accounts 18a-18d.

The arrangement 10 is typically referred to as a cloud computing type arrangement, or an internet-based communication management arrangement. In the arrangement 10, the common infrastructure 14 is shared between all the airlines 26a-26d. The arrangement 10 facilitates updating software and data files on the aircraft 22a-22d because the administrating entity 20, through the common infrastructure 14, can distribute updates to the individual aircraft 22a-22d simultaneously or individually.

In this example, the common infrastructure 14 includes a controller 30 having a memory portion 34 and a processor 38. The memory portion 34 stores a program that is executed by the processor 38, for example.

In terms of hardware architecture, the controller 30 can include one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as additional controllers, buffers (caches), drivers, repeaters, and receivers to enable communications. Further, the local interface may include address, control, and/or data connections to enable appropriate communications among the aforementioned components.

The example processor 38 used within the controller 30 executes software code, particularly software code stored in the memory portion 34. The processor 38 can be a custom made or commercially available processor, a central processing unit (CPU), an auxiliary processor among several processors associated with the computing device, a semiconductor based microprocessor (in the form of a microchip or chip set) or generally any device for executing software instructions.

The memory portion 34 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. Note that the memory can also have a distributed architecture, where various components are situated remotely from one another, but can be accessed by the processor.

The software in the memory portion 34 may include one or more additional or separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The Input/Output devices that may be coupled to system I/O Interface(s) may include input devices, for example but not limited to, a keyboard, mouse, scanner, microphone, camera, proximity device, etc. Further, the Input/Output devices may also include output devices, for example but not limited to, a printer, display, etc. Finally, the Input/Output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

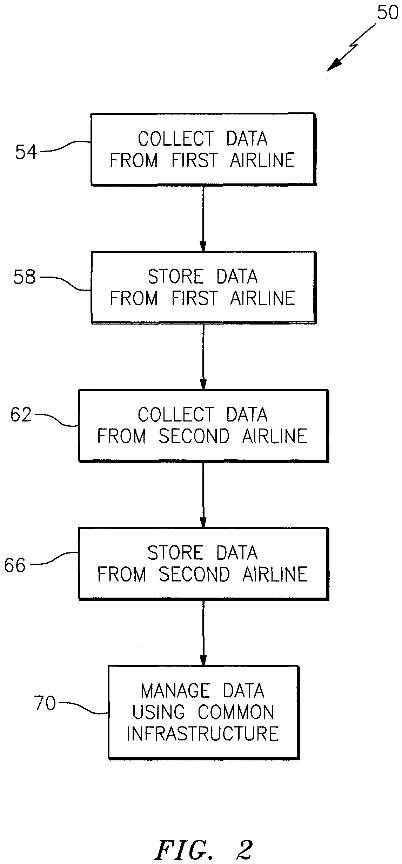

Referring to Figure 2 with continuing reference to Figure 1, an example avionic data communication method 50 utilized by the arrangement 10 includes a step 54 of using the common infrastructure 14 to collect data from the aircraft 22a that is associated with the airline 26a. The common infrastructure 14 may collect data during flight from an ACMS type avionics box located on the airline 26a, for example. The server arrangement 14 stores that data in the first account 18a at a step 58.

The method 10 then collects data from a second aircraft 22b that is associated with a second airline 26b at a step 62, and stores that data in the second account at a step 66.

The method 50 then manages the first account 18a and the second account 18b utilizing the common infrastructure 14 at a step 70. The administrating entity 20 is responsible for the management in this example.

In some examples, the method 50 manages a computer on the first aircraft 22a and a computer on the second aircraft 22b. The first aircraft 22a and the second aircraft 22b may each include an ACMS type avionics box that is controlled and configured using the common infrastructure 14, for example. Management may also include updating software or data files onboard the aircraft 22a and 22b. Further, management may include updating software or data at ground-based locations associated with the aircraft 22a and 22b, such as a ground-based location where one of the aircraft 22a or 22b is parked.

In some more specific examples, managing data using the common infrastructure 14 includes converting the data to engineering units, applying different file formatting (e.g., csv and qar), delivering data to the airlines 26a-26d networks, changing the data acquisition content from the aircraft 22a-22d to remove or add new parameter data. Still other examples include configuring and managing avionics software, security software or data file changes to the aircraft 22a-22d, managing characteristics of the communication link between the common infrastructure 14 and the aircraft 22a-22d, such as when to use Satcom wireless communications, or when to use cellular wireless communications.

Features of the disclosed examples include providing airlines with a centralized service to manage their avionic files and data. The centralized service, or common infrastructure, manages all aspects of the system infrastructure, which includes the aircraft, the wireless communications, and the ground based computers. The centralized service manages each of these through the web browser. The security of the data communication is enhanced as a common infrastructure is used rather than a separate infrastructure for each airline. The software update process is enhanced as the updates are initiated from the common infrastructure.

The preceding description is exemplary rather than limiting in nature. Variations and modifications to the disclosed examples may become apparent to those skilled in the art that do not necessarily depart from the essence of this disclosure. Thus, the scope of legal protection given to this disclosure can only be determined by studying the following claims.

## Claims

1. An avionic data communication management arrangement (10), comprising:
a common infrastructure (14) having a first account (18a) and a second account (18b), the first account (18a) configured to receive and store avionic data collected from a first aircraft (22a), the second account (18b) configured to receive and store avionic data collected from a second aircraft (22b) that is from a different airline than the first aircraft (22a), wherein the avionic data within first account (18a) and the avionic data within the second account (18b) is accessible by an administrating entity (20).

2. The avionic data communication management arrangement (10) of claim 1, wherein the avionic data collected from the first aircraft (22a) is not accessible by the airline (26b) that is associated with the second aircraft (22b), and the avionic data collected from the second aircraft (22b) is not accessible by the airline (26a) that is associated with the first aircraft (22a).

3. The avionic data communication management arrangement (10) of claim 1 or 2, wherein the avionic data collected from the first airline (26a) can be accessed or managed by the first airline (26a) through a web browser.

4. The avionic data communication management arrangement (10) of claim 1, 2 or 3, wherein the data storage location comprises at least one server managed by the administrating entity (20).

5. The avionic data communication management arrangement (10) of any one of the preceding claims, wherein the administrating entity (20) is different than the airline (26a) associated with the first aircraft (22a) and different from the airline (26b) associated with the second aircraft (22b).

6. The avionic data communication management arrangement (10) of any one of the preceding claims, wherein the common infrastructure (14) is configured to initiate to update from the administrating entity (20) to software and data files on the first aircraft (22a) and software on the second aircraft (22b).

7. The avionic data communication management arrangement (10) of any one of the preceding claims, wherein the avionic data within the first account (18a) and the avionic data within the second account (18b) is configured to be managed by the administrating entity (20), wherein optionally the administering entity (20) is configured to manage by converting the avionic data to engineering units, reformatting the avionic data, delivering selected avionic data to the first airline (22a) or the second airline (22b), or some combination of these.

8. An avionic data collection method, comprising:
communicating data with a first aircraft (22a) from a first airline (26a);
storing data associated with the first aircraft (22a) in a first account (18a);
communicating data with a second aircraft (22b) from a second airline (26b) that is different than the first airline (26a);
storing data associated with the second aircraft (22b) in a second account (18b); and
managing the first account (18a) and the second account (18b) with a common infrastructure (14).

9. The avionic data collection method of claim 8, including initiating an update to software or data files of the first airline (26a) and the second aircraft (22b) from the common infrastructure (14).

10. The avionic data collection method of claim 9, wherein the initiating is simultaneous.

11. The avionic data collection method of any one of claims 8 to 10, comprising enabling the first airline (26a) to access the first account (18a) from a web browser, the method optionally including charging the first airline (26a) to access the first account (18a).

12. The avionic data collection method of any one of claims 8 to 11, including communicating reports to the first airline (26a) and the second airline (26b) from the common infrastructure (14).

13. An avionic data communication management arrangement (10), comprising:
a server arrangement having a first account (18a) and a second account (18b) that are each configured to store data obtained from different airlines (26a,26b), the first account (18a) accessible to a first user and inaccessible to a second user, the second account (18b) accessible to the second user and inaccessible to the first user, wherein the first account (18a) and the second account (18b) are both accessible to an administrator.

14. The avionic data communication management arrangement of claim 13, wherein the first user and the second user are separate airlines (26a,26b).

15. The avionic data communication management arrangement of claim 13 or 14, wherein the server arrangement is configured to separately communicate a software update to the first user and the second user.
